(19) Europäisches Patentamt
European Patent Office
Office européen des brevets

(11) **EP 2 647 856 A2**

(12) **EUROPÄISCHE PATENTANMELDUNG**

(43) Veröffentlichungstag:
**09.10.2013 Patentblatt 2013/41**

(51) Int Cl.:
***F16C 19/54*** *(2006.01)*

(21) Anmeldenummer: **13161273.1**

(22) Anmeldetag: **27.03.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **02.04.2012 DE 102012205318**

(71) Anmelder: **Aktiebolaget SKF**
**41550 Göteborg (SE)**

(72) Erfinder: **Kure, Gottfried**
**4050 Traun (AT)**

(74) Vertreter: **Schonecke, Mitja**
**SKF GmbH**
**Gunnar-Wester-Straße 12**
**97421 Schweinfurt (DE)**

(54) **Lageranordnung**

(57) Die Erfindung betrifft eine Lageranordnung (1), umfassend ein erstes als Festlager ausgebildetes Wälzlager (2) und ein zweites als Loslager ausgebildetes Wälzlager (3), wobei die beiden Wälzlager ein Wellenelement (4) relativ zu einem Gehäuse (5) lagern, wobei beide Wälzlager (2, 3) einen Innenring (6) mit einer Innenringlaufbahn (7), einen Außenring (8) mit einer Außenringlaufbahn (9) und zwischen den Lagerringen angeordnete Wälzkörper (10) aufweisen. Um bei Sicherstellung einer ausreichenden Festlager-Loslagerfunktion, insbesondere bei der Anwendung in einem Eisenbahn-Fahrmotor, eine hohe Gebrauchsdauer der Lageranordnung zu erreichen, sieht die Erfindung vor, dass beide Wälzlager (2, 3) als Rillenkugellager ausgebildet sind, wobei die Innenringlaufbahn (7) und/oder die Außenringlaufbahn (9) des zweiten Wälzlagers (3) zumindest abschnittsweise einen Laufbahnradius ($r_I$, $r_A$) aufweist, der zum Durchmesser ($D_0$) der als Kugeln ausgebildeten Wälzkörper (10) in einem Verhältnis steht, das der Beziehung genügt: $r_{I/A} / D_0 > 0,55$.

Fig. 2

**Beschreibung**

Die Erfindung betrifft eine Lageranordnung, umfassend ein erstes als Festlager ausgebildetes Wälzlager und ein zweites als Loslager ausgebildetes Wälzlager, wobei die beiden Wälzlager ein Wellenelement relativ zu einem Gehäuse lagern, wobei beide Wälzlager einen Innenring mit einer Innenringlaufbahn, einen Außenring mit einer Außenringlaufbahn und zwischen den Lagerringen angeordnete Wälzkörper aufweisen.

In verschiedenen maschinen- und fahrzeugbautechnischen Anwendungen, beispielsweise im Eisenbahnenbau und hier insbesondere bei Eisenbahnfahrmotoren, muss ein Wellenelement relativ zu einem Gehäuse gelagert werden, wobei das Wellenelement mittels zweier Lager gelagert wird. Zwecks statisch bestimmter Lagerung muss eines der Lager hierbei als Festlager (das keine axiale Verschieblichkeit erlaubt) und eines der Lager als Loslager (das eine gewisse axiale Verschieblichkeit erlaubt) ausgebildet sein. Als Festlager werden bei der genannten Anwendung bei Eisenbahnfahrmotoren häufig Rillenkugellager verwendet. Als Loslager kommen Zylinderrollenlager zum Einsatz, die über eine gewisse Wegerstreckung eine axiale Verschieblichkeit ermöglichen.

Die Loslagerfunktion ist für manche Anwendungen essentiell, weil sich aufgrund von Toleranzschwankungen und vor allem Temperaturveränderungen im Betrieb der Lageranordnung unterschiedliche axial Ausdehnungen ergeben, die über die Loslagerfunktion ausgeglichen werden müssen, um Spannungen in der Lageranordnung zu eliminieren.

Im genannten Falle der Eisenbahn-Fahrmotoren können dabei elektrisch isolierte Lagerringe bzw. Wälzkörper zum Einsatz kommen. Dabei können speziell mit einer Isolierschicht versehene Lagerringe bzw. Wälzkörper verwendet werden. Alternativ können auch keramische Wälzkörper eingesetzt werden, um einen Stromdurchgang durch das Lager zu verhindern. Hiermit können Beschädigungen der Lagerkomponenten durch elektrische Kriechströme verhindert werden. Vorteilhaft bei keramischen Wälzkörpern sind auch noch die geringere Betriebstemperatur, der geringere Verschleiß und die längere Fettgebrauchsdauer.

Um eine hinreichende Gebrauchsdauer der Lageranordnung zu erreichen, muss ferner eine entsprechende Schmierung vorgesehen werden. Diesbezüglich sind Zylinderrollenlager ungünstiger als Rillenkugellager.

Demgemäß ist die Gebrauchsdauer entsprechend begrenzt, wenn zur Sicherstellung der genannten Loslagerfunktion ein Loslager in Form eines Zylinderrollenlagers eingesetzt wird.

Der Erfindung liegt die Aufgabe zugrunde, eine Lageranordnung der eingangs genannten Art so fortzubilden, dass einerseits eine ausreichende Loslagerfunktion sichergestellt ist, dass andererseits aber auch, insbesondere bei der Anwendung in einem Eisenbahn-Fahrmotor, eine hohe Gebrauchsdauer der Lageranordnung erreicht wird.

Die Lösung dieser Aufgabe durch die Erfindung ist dadurch gekennzeichnet, dass beide Wälzlager der Lageranordnung als Rillenkugellager ausgebildet sind, wobei die Innenringlaufbahn und/oder die Außenringlaufbahn des zweiten Wälzlagers (Loslager) zumindest abschnittsweise einen Laufbahnradius aufweist, der zum

Durchmesser der als Kugeln ausgebildeten Wälzkörper in einem Verhältnis steht, das der Beziehung genügt:

$$r_{I/A} \, / \, D_0 > 0{,}55.$$

Bevorzugt genügt das genannte Verhältnis der Beziehung:

$$r_{I/A} \, / \, D_0 > 0{,}65.$$

Indes ist das als erstes Lager (Festlager) fungierende Rillenkugellager klassisch ausgebildet, d. h. die Innenringlaufbahn und/oder die Außenringlaufbahn des ersten Wälzlagers weisen einen Laufbahnradius auf, der zum Durchmesser der als Kugeln ausgebildeten Wälzkörper in einem Verhältnis steht, das der Beziehung genügt:

$$r_{I/A} \, / \, D_0 < 0{,}52.$$

Der Laufbahnradius der Innenringlaufbahn und/oder der Außenringlaufbahn des zweiten Wälzlagers kann gemäß einer Weiterbildung der Erfindung ausgehend von einem Wert im Bereich der Mittenebene des zweiten Lagers auf einen höheren Wert beabstandet von der Mittenebene ansteigen. Hierbei ist eine symmetrische Ausbildung möglich, d. h. die Innenringlaufbahn und/oder die Außenringlaufbahn des zweiten Wälzlagers ist zur Mittenebene des zweiten Lagers symmetrisch ausgebildet. Möglich ist aber auch eine unsymmetrische Ausgestaltung, d. h. die Innenringlaufbahn und/oder die Außenringlaufbahn des zweiten Wälzlagers ist dann zur Mittenebene des zweiten Lagers unsymmetrisch ausgebildet.

Hiernach ist also der Krümmungsradius (im Radialschnitt gesehen) der Laufbahn nicht konstant, sondern er ändert sich über die axiale Erstreckung der Laufbahn. Die Laufbahn kann in der Mitte des Lagers einen definierten Radius aufweisen, wobei sich dann eine ständige Reduzierung des Krümmungsradius zu den axialen Endbereichen des Lagerrings hin ergibt. Möglich ist es aber auch, dass sich eine ständige Vergrößerung des Krümmungsradius zu den axialen Endbereichen des Lagerrings hin ergibt.

Bevorzugt kommt eine Hybridlösung zum Einsatz, d. h. die Kugeln der beiden Wälzlager bestehen dann aus keramischem Material, während die Lagerringe aus Stahl (zumeist 100 Cr 6) bestehen.

Die Kugeln des zweiten Wälzlagers sind bevorzugt von einem einteiligen Käfig gehalten. Der Käfig ist dabei (im montierten Zustand des Lagers) bevorzugt symmetrisch zur Mittenebene des zweiten Lagers ausgebildet.

Die bevorzugte, aber nicht ausschließliche Anwendung der vorgeschlagenen Lageranordnung ist ein elektrischer Eisenbahn-Fahrmotor oder eine Eisenbahn-Mittelmaschine (stationärer Motor in einer Eisenbahn).

Die vorgeschlagene Lösung stellt also darauf ab, dass die Lageranordnung - ausgeführt als Fest-Loslagerung - durch zwei Rillenkugellager realisiert wird, wobei das als Loslager fungierende Rillenkugellager gezielt hinsichtlich des Schmiegeverhältnisses zwischen den Kugeln und ihren Laufbahnen modifiziert wird. Der genannte Schmiegungskoeffizient (Verhältnis zwischen dem Laufbahnradius und dem Kugeldurchmesser) wird für das als Loslager ausgebildete Rillenkugellager deutlich über übliche Werte erhöht. Dies reduziert zwar die Gebrauchsdauer geringfügig, stellt aber zum einen eine Möglichkeit für einen axialen Ausgleich sicher, zum anderen kann durch eine verbesserte Schmierung (im Vergleich mit Zylinderrollenlagern) eine hinreichend hohe Gebrauchsdauer erreicht werden.

Bei üblichen Rillenkugellagern liegt der genannte Schmiegungskoeffizient (Verhältnis zwischen dem Laufbahnradius und dem Kugeldurchmesser) unter 0,52; das genannte erste Rillenkugellager ist derartig ausgeführt. Bei einem solchen Standard-Rillenkugellager ergibt sich ein Axialspiel, das vom Radialspiel abhängig ist und häufig im Bereich des zehnfachen Wertes des Radialspiels liegt. Dies ist allerdings nicht ausreichend, um die genannten Loslagerfunktion zu gewährleisten.

Durch den gewählten Schmiegungskoeffizienten größer als 0,55 - allerdings zumeist kleiner als 1,0 - wird ein idealer Kompromiss zwischen der axialen Ausgleichsfunktion des Loslagers und der Gebrauchsdauer geschaffen.

Unter Sicherheitsgesichtspunkten ist weiterhin folgendes sehr vorteilhaft: Klassische Rillenkugellager setzen einen Käfig ein, der meist als Nietkäfig ausgebildet ist und/oder der ein unsymmetrisches Design aufweist. Dies ergibt sich aus der erforderlichen Montagesequenz des Lagers. Bei der vorgeschlagenen Lösung mit wesentlich erhöhtem Schmiegungskoeffizienten ergibt sich die Möglichkeit, die Schulterhöhe der Lagerringe im Durchmesser zu reduzieren, so dass es möglich wird, im gegebenen Falle die in einem einteiligen Käfig vormontierten Wälzkörper axial zwischen die Lagerringe einzuschieben. Die ermöglicht den Einsatz eines einteiligen und symmetrischen Käfigs, der aus Sicherheitsgesichtspunkte klar dem Nietkäfig vorzuziehen ist. Ein Käfigbruch ist damit bei erfindungsgemäßer Ausgestaltung sehr viel unwahrscheinlicher.

Somit können im Verhältnis zur vorbekannten Lösung (mit einem Zylinderrollenlager als Loslager) wesentliche Kosten bei der Lagerherstellung eingespart werden.

Hinsichtlich der Qualität und Zuverlässigkeit zeichnet sich die vorgeschlagene Lageranordnung positiv aus.

Im Vergleich mit Zylinderrollenlagern kann auch eine günstigere Schmierung (Fettung) des Lagers und somit einen hohe Gebrauchsdauer sichergestellt werden.

Verglichen mit Standard-Rillenkugellagern ergibt sich auch vorteilhaft eine geringere Unterbelastung des zweiten Lagers, so dass ein verbessertes Abrollen der Kugeln gewährleistet ist. Dies hat positive Auswirkungen auf die Wartungsintervalle. Es sei noch angemerkt, dass die beiden bzw. die mindestens zwei Rillenkugellager der Lageranordnung zur Lagerung des Wellenelements - einmal das Festlager und einmal das Loslager - beliebig angeordnet sein können. Klassisch ist die Lagerung der Welle eines elektrischen Fahrmotors einer Eisenbahn so ausgebildet, dass die Lager axial endseitig im Motor angeordnet sind; die gelagerte Welle reicht durch das eine Lager hindurch und trägt jenseits des Lagers ein Antriebsritzel, das mit einem Zahnrad kämmt. Bei sog. einlagerigen Maschinen ist das eine Lager im Motor angeordnet, das andere Lager befindet sich im axialen Endbereich der gelagerten Welle, d. h. außerhalb des Motors und noch hinter dem Antriebsritzel. All diese Fälle sind von der vorliegenden Erfindung umfasst.

In der Zeichnung sind Ausführungsbeispiele der Erfindung dargestellt. Es zeigen:

Fig. 1    eine teilweise geschnittene Draufsicht auf einen Fahrmotor eines Schienenfahrzeugs, der eine erfindungsgemäße Lageranordnung einsetzt, mit Darstellung eines angetriebenen Radsatzes,

Fig. 2    den Radialschnitt durch ein Rillenkugellager gemäß der Erfindung, das als Loslager fungiert (zweites Lager),

Fig. 3    eine Ausschnittsvergrößerung aus Fig. 2, wobei eine alternative Ausgestaltung realisiert ist, und

Fig. 4    schematisch die Darstellung einer axialen Ausgleichsbewegung des als Loslager (zweites Lager) fungierenden Rillenkugellagers.

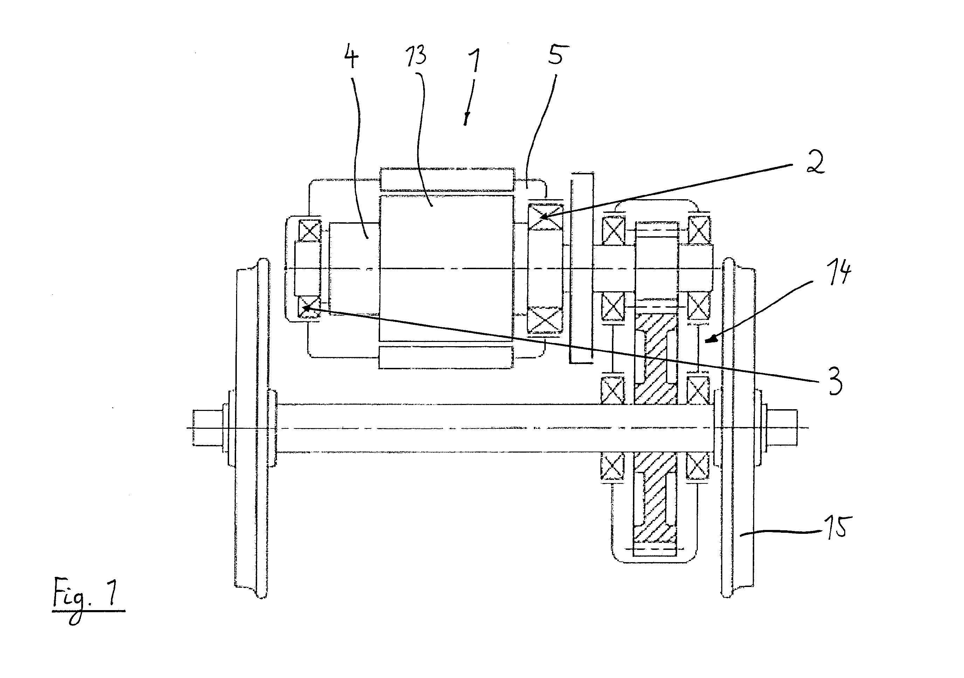

In Fig. 1 ist eine Draufsicht auf einen Radsatz eines Schienenfahrzeugs zu sehen. Der elektrische Fahrmotor 13 treibt über ein Getriebe 14 den Radsatz 15 an. Der Rotor des Fahrmotors 13 ist - als Wellenelement 4 ausgebildet - mittels einer Lageranordnung 1 in einem Gehäuse 5 gelagert. Die Lageranordnung 1 umfasst zwei  Lager 2 und 3, nämlich ein erstes Wälzlager 2, das als Festlager fungiert, und ein zweites Wälzlager 3, das als Loslager konzipiert ist.

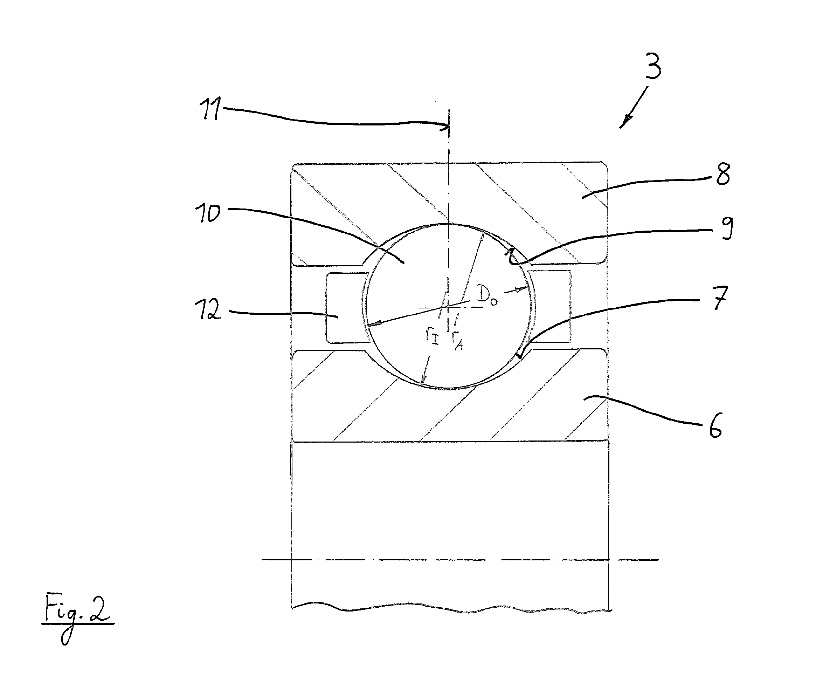

Dieses zweite (Los)Lager 3 ist in Fig. 2 im Radialschnitt zu sehen. Das Lager hat einen Innenring 6 mit einer Innenringlaufbahn 7 und einen Außenring 8 mit einer Außenringlaufbahn 9. Zwischen den Lagerringen 6, 8 sind Kugeln 10 angeordnet. Das Lager 3 ist also als Rillenkugellager ausgebildet.

Eingetragen sind auch folgende geometrische Größen des Lagers: Der Laufbahnradius des Innenrings 6 ist mit $r_I$ angegeben. Der Laufbahnradius des Außenrings 8 ist $r_A$. Der Durchmesser der Kugel 10 ist $D_0$. Während das Verhältnis $r_{I/A} / D_0$ bei Standard-Rillenkugellager zumeist deutlich unter 0,52 liegt, ist es bei dem als Loslager ausgebildeten zweiten Lager 3 wesentlich erhöht und beträgt mindestens $r_{I/A} / D_0 = 0{,}55$.

In Fig. 2 sind die Laufbahnen von Innenring und Außenring symmetrisch ausgebildet, d. h. sie sind symmetrisch zu einer Mittenebene 11 des zweiten Lagers 3.

Die Kugel 10 werden vorliegend von einem einteilig ausgebildeten Käfig 12 gehalten, der gleichermaßen symmetrisch zur Mittenebene 11 ausgebildet ist.

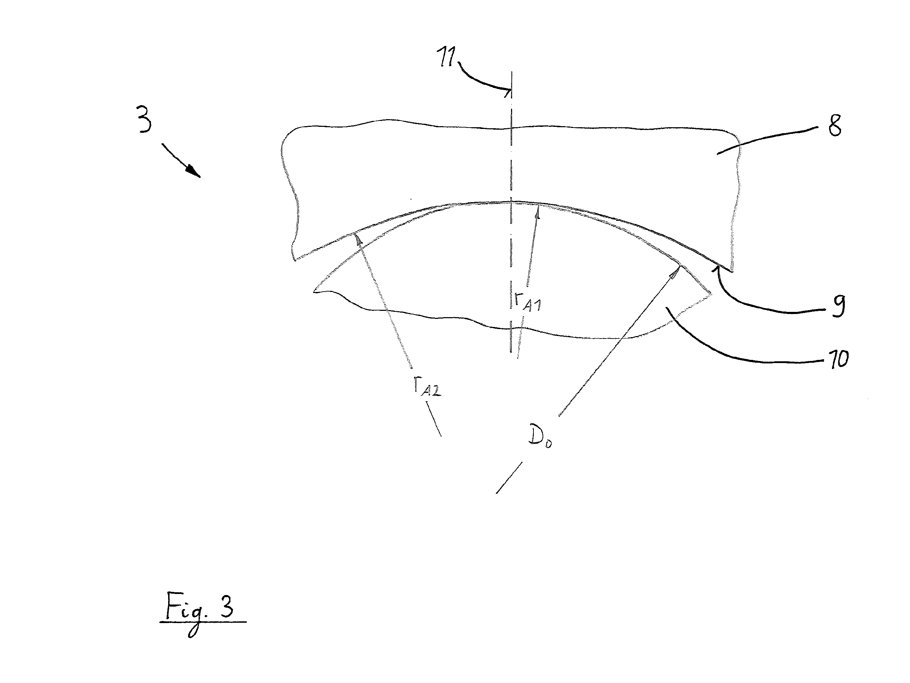

In Fig. 3 ist dargestellt, dass die Krümmung der Laufbahnen 7, 9 - hier dargestellt am Beispiel des Außenrings 8 - im Radialschnitt nicht zwingend konstant sein muss. Im Bereich der Mittenebene 11 ist der Krümmungsradius der Laufbahn 9 mit $r_{A1}$ angegeben. Beabstandet von der Mittenebene 11 ist der Krümmungsradius dann aber auf einen größeren Wert $r_{A2}$ angestiegen, d. h. die Laufbahn 9 ist jetzt flacher als in der Mitte des Lagerrings 8, d. h. im Bereich der Mittenebene 11. Der Krümmungsradius $r_A$ (Analoges gilt für den Krümmungsradius $r_I$) kann sich dabei allmählich von der Mittenebene 11 ausgehend zum Randbereich des Lagerrings 8 verändern.

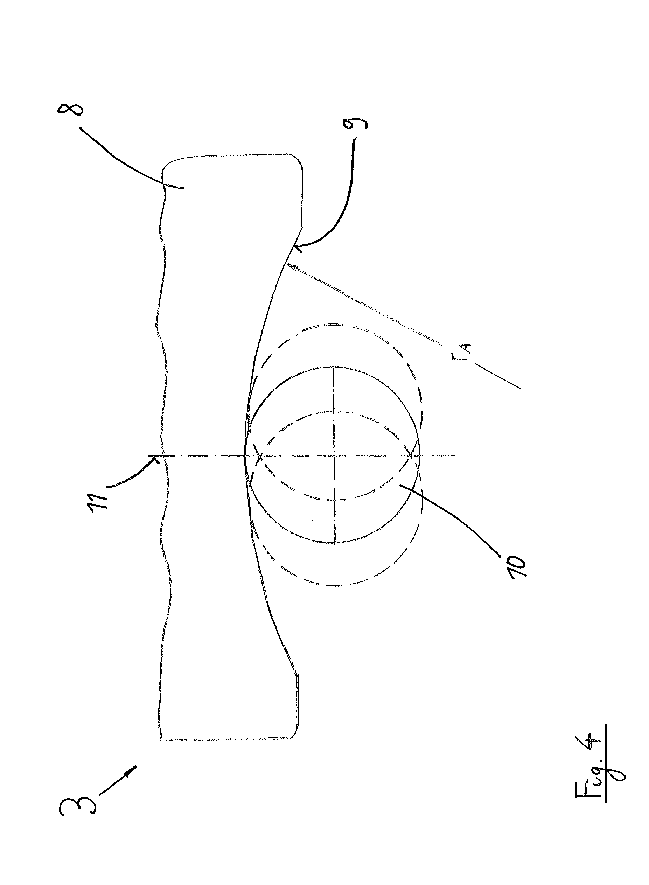

In Fig. 4 ist noch einmal die Loslagerfunktion illustriert, die beim zweiten Lager 3 verwirklicht ist. Aufgrund er hier recht groß gewählten Laufbahnradius $r_A$ des Außenrings 8 ergibt sich, dass die Kugeln 10 sich axial verschieben können (s. die gestrichelt eingetragenen Position der Kugeln), ohne dass es zu einem signifikanten Verklemmen der Kugeln 10 zwischen Außen- und Innenring kommt.

**Bezugszeichenliste**

| | |
|---|---|
| 1 | Lageranordnung |
| 2 | erstes Wälzlager (Rillenkugellager) |
| 3 | zweites Wälzlager (Rillenkugellager) |
| 4 | Wellenelement |
| 5 | Gehäuse |
| 6 | Innenring |
| 7 | Innenringlaufbahn |
| 8 | Außenring |
| 9 | Außenringlaufbahn |
| 10 | Wälzkörper (Kugel) |
| 11 | Mittenebene |
| 12 | Käfig |
| 13 | Fahrmotor |
| 14 | Getriebe |
| 15 | Radsatz |
| | |
| $r_I$ | Laufbahnradius des Innenrings |
| $r_{I1}$ | erster Laufbahnradius des Innenrings |
| $r_{I2}$ | zweiter Laufbahnradius des Innenrings |
| $r_A$ | Laufbahnradius des Außenrings |
| $r_{A1}$ | erster Laufbahnradius des Außenrings |
| $r_{A2}$ | zweiter Laufbahnradius des Außenrings |

(fortgesetzt)

$D_0$       Durchmesser der Kugel

**Patentansprüche**

1. Lageranordnung (1), umfassend ein erstes als Festlager ausgebildetes Wälzlager (2) und ein zweites als Loslager ausgebildetes Wälzlager (3), wobei die beiden Wälzlager ein Wellenelement (4) relativ zu einem Gehäuse (5) lagern, wobei beide Wälzlager (2, 3) einen Innenring (6) mit einer Innenringlaufbahn (7), einen Außenring (8) mit einer Außenringlaufbahn (9) und zwischen den Lagerringen angeordnete Wälzkörper (10) aufweisen,
**dadurch gekennzeichnet,**
**dass** beide Wälzlager (2, 3) als Rillenkugellager ausgebildet sind, wobei die Innenringlaufbahn (7) und/oder die Außenringlaufbahn (9) des zweiten Wälzlagers (3) zumindest abschnittsweise einen Laufbahnradius ($r_I$, $r_A$) aufweist, der zum Durchmesser ($D_0$) der als Kugeln ausgebildeten Wälzkörper (10) in einem Verhältnis steht, das der Beziehung genügt:

$$r_{I/A} \, / \, D_0 > 0{,}55.$$

2. Lageranordnung nach Anspruch 1, **dadurch gekennzeichnet, dass** der Laufbahnradius ($r_I$, $r_A$) zum Durchmesser ($D_0$) der Kugeln (10) zumindest abschnittsweise in einem Verhältnis steht, das der Beziehung genügt:

$$r_{I/A} \, / \, D_0 > 0{,}65.$$

3. Lageranordnung nach Anspruch 1 oder 2, **dadurch gekennzeichnet, dass** die Innenringlaufbahn (7) und/oder die Außenringlaufbahn (9) des ersten Wälzlagers (2) einen Laufbahnradius ($r_I$, $r_A$) aufweist, der zum Durchmesser ($D_0$) der als Kugeln ausgebildeten Wälzkörper (10) in einem Verhältnis steht, das der Beziehung genügt:

$$r_{I/A} \, / \, D_0 < 0{,}52.$$

4. Lageranordnung nach einem der Ansprüche 1 bis 3, **dadurch gekennzeichnet, dass** der Laufbahnradius ($r_I$, $r_A$) der Innenringlaufbahn (7) und/oder der Außenringlaufbahn (9) des zweiten Wälzlagers (3) ausgehend von einem Wert ($r_{I1}$, $r_{A1}$) im Bereich der Mittenebene (11) des zweiten Lagers (3) auf einen höheren Wert ($r_{I2}$, $r_{A2}$) beabstandet von der Mittenebene (11) ansteigt.

5. Lageranordnung nach Anspruch 4, **dadurch gekennzeichnet, dass** die Innenringlaufbahn (7) und/oder die Außenringlaufbahn (9) des zweiten Wälzlagers (3) zur Mittenebene (11) des zweiten Lagers (3) symmetrisch ausgebildet ist.

6. Lageranordnung nach Anspruch 4, **dadurch gekennzeichnet, dass** die Innenringlaufbahn (7) und/oder die Außenringlaufbahn (9) des zweiten Wälzlagers (3) zur Mittenebene (11) des zweiten Lagers (3) unsymmetrisch ausgebildet ist.

7. Lageranordnung nach einem der Ansprüche 1 bis 6, **dadurch gekennzeichnet, dass** die Kugeln (10) der beiden Wälzlager aus keramischem Material bestehen.

8. Lageranordnung nach einem der Ansprüche 1 bis 7, **dadurch gekennzeichnet, dass** die Kugeln (10) des zweiten Wälzlagers (3) von einem einteiligen Käfig (12) gehalten werden.

9. Lageranordnung nach Anspruch 8, **dadurch gekennzeichnet, dass** der Käfig (12) im montierten Zustand des Lagers symmetrisch zur Mittenebene (11) des zweiten Lagers (3) ausgebildet ist.

10. Lageranordnung nach einem der Ansprüche 1 bis 9, **dadurch gekennzeichnet, dass** sie Bestandteil eines elektrischen Eisenbahn-Fahrmotors oder einer Eisenbahn-Mittelmaschine ist.

Fig. 1

EP 2 647 856 A2

Fig. 2

Fig. 3

EP 2 647 856 A2

Fig. 4